# EUROPÄISCHE PATENTANMELDUNG

(11) **EP 3 070 496 A1**
(43) Veröffentlichungstag der Anmeldung: **21.09.2016**
(21) Anmeldenummer: 16156525.4
(22) Anmeldetag: 19.02.2016
(51) Int. Cl.: G01S 17/42, G01S 7/481, G01S 7/486

(54) **POLYGONSCANNER UND VERFAHREN ZUM ERFASSEN VON OBJEKTEN**

(30) Priorität: 18.03.2015 DE 102015104021
(71) Anmelder: SICK AG, 79183 Waldkirch (DE)
(72) Erfinder: Jägel, Matthias, 79104 Freiburg (DE); Schopp, Thomas, 79112 Freiburg (DE); Honal, Dr. Matthias, 79299 Wittnau (DE)

(57) **Zusammenfassung**

Es wird ein Polygonscanner (10) zum Erfassen von Objekten (24) in einem Überwachungsbereich (22) mit einem Lichtsender (12) zum Aussenden eines Lichtstrahls (16) in den Überwachungsbereich (22), mit einem Lichtempfänger (30) zum Empfangen des von Objekten (24) in dem Überwachungsbereich (22) reflektierten Lichtstrahls (26), mit einer Auswertungseinheit (32) zum Auswerten eines Empfangssignals des Lichtempfängers (30) und mit einer drehbaren Spiegeleinheit (20) zur periodischen Ablenkung des Lichtstrahls (16, 26) angegeben, die mehrere Spiegelfacetten (34) aufweist, um so als Überwachungsbereich (22) einen Winkelausschnitt mehrfach je Umdrehung der Spiegeleinheit (20) mit einer jeweiligen Spiegelfacette (34) abzutasten. Dabei weisen die Spiegelfacetten (34) untereinander unterschiedliche Reflexionsgrade auf.

## Beschreibung

Die Erfindung betrifft einen Polygonscanner und ein Verfahren zum Erfassen von Objekten in einem Überwachungsbereich nach dem Oberbegriff von Anspruch 1 beziehungsweise 8.

Laserscanner werden für vielfältige Überwachungs- und Vermessungsaufgaben verwendet. Dazu wird eine Überwachungsebene mit einem Lichtstrahl abgetastet, der durch einen Drehspiegel abgelenkt wird, und das reflektierte Licht wird ausgewertet. In einem Polygonscanner weist der Drehspiegel mehrere Spiegelfacetten auf, so dass nur ein Teilausschnitt der Überwachungsebene erfasst wird, dieser aber mehrfach je Umdrehung entsprechend der Anzahl der Spiegelfacetten.

Um auch Informationen über Objektabstände, Konturen oder Profile zu gewinnen, wird meist nicht nur die Anwesenheit von Objekten, sondern zugleich auch deren Entfernung bestimmt. Derartige entfernungsmessende Laserscanner arbeiten nach einem Lichtlaufzeitprinzip, bei dem die Laufzeit vom Scanner in die Szenerie und zurück gemessen wird und anhand der Lichtgeschwindigkeit Entfernungsdaten berechnet werden.

Zwei Arten des Lichtlaufzeitverfahrens sind weit verbreitet. Bei phasenbasierten Verfahren moduliert der Lichtsender den Scanstrahl, und es wird die Phase zwischen einer Referenz und dem empfangenen Scanstrahl ermittelt. Pulsbasierte Verfahren prägen dem Scanstrahl ein signifikantes Muster auf, beispielsweise einen schmalen Puls von nur wenigen Nanosekunden Dauer und bestimmen den Empfangszeitpunkt dieses Musters. In einer als Pulsmittelungsverfahren bezeichneten Verallgemeinerung werden mehrere Pulse oder eine Pulsfolge ausgesandt und die empfangenen Pulse statistisch ausgewertet.

Ein großes Problem bei der optischen Distanzmessung stellt die hohe Dynamik des Empfangssignals dar. Der Empfangspegel schwankt vor allem wegen zwei Einflussfaktoren erheblich, nämlich dem Remissionsgrad des angetasteten Objekts und dem Objektabstand. Der Remissionsgrad kann für ein schwarzes Ziel im Bereich weniger Prozent, für einen Retroreflektor sogar oberhalb von hundert Prozent liegen. Über den Abstand fällt der Empfangspegel bei einem Lambert'schen Ziel quadratisch ab. Daraus ergibt sich ein Dynamikbereich, der viele Größenordnungen umspannt.

Soll die geringere Leistungsfähigkeit beispielsweise bei der Erfassung von Reflektoren nicht in Kauf genommen werden, so erfordert dies großen Aufwand in der Empfangselektronik und der Auswertung mit entsprechenden Kosten sowie Platzbedarf im Gerät. Beispielsweise verwendet ein Laserscanner nach EP 2 182 377 A1 zwei parallele Empfangspfade mit unterschiedlichem Verstärkungsfaktor für starke und schwache Signale. In der EP 2 395 368 A1 wird ein Laserscanner beschrieben, der nacheinander Sendepulse unterschiedlicher Intensität aussendet und wählt für die Entfernungsbestimmung eines der daraufhin aufgezeichneten Empfangssignale aus.

In der Einleitung der DE 10 2014 00245 B3 wird erwähnt, dass man die Spiegelfacetten eines Polygonscanners gegeneinander verkippen kann. Dadurch entsteht ein Höhenversatz bei den wiederholten Abtastungen, die eine Mehrlagenabtastung ermöglicht. Eine andere Variation der Ausgestaltung der Spiegelfacetten ist eine unterschiedliche Krümmung gemäß US 4 560 862 A, wodurch eine Abtastung mit verschiedenen Brennebenen ermöglicht wird. Beide bekannten Maßnahmen sind weder dafür gedacht noch geeignet, das angesprochene Dynamikproblem zu lösen oder abzumildern.

In der US 2003/0063183 A1 wird eine Korrekturschaltung vorgeschlagen, um herstellungsbedingte Unterschiede in der Reflexion von Spiegelfacetten eines Polygonspiegelrads auszugleichen. Hierbei handelt es sich zunächst um keinen gattungsgemäßen Polygonscanner, sondern einen Dokumentenscanner. Das Dynamikproblem ist hier wegen der sehr begrenzten Reichweiteschwankungen von vorneherein leicht beherrschbar. Außerdem dient die Korrekturschaltung gerade dazu, den Empfangspegel unabhängig von der jeweiligen Spiegelfacette zu machen. Damit bleibt der Dynamikbereich für alle Spiegelfacetten gleich groß, und es bedarf weiterhin einer der oben geschilderten Maßnahmen, um Übersteuerungen beziehungsweise nicht auswertbar kleine Empfangssignale zu vermeiden.

Daher ist Aufgabe der Erfindung, die Erfassung eines gattungsgemäßen Scanners zu verbessern.

Diese Aufgabe wird durch einen Polygonscanner und ein Verfahren zum Erfassen von Objekten in einem Überwachungsbereich nach Anspruch 1 beziehungsweise 8 gelöst. Ein solcher Polygonscanner besitzt eine drehbare Spiegeleinheit mit mehreren Spiegelfacetten, die während einer Umdrehung nacheinander den scannenden Lichtstrahl ablenken. Dabei handelt es sich insbesondere um ein Polygonspiegelrad mit Spiegelflächen oder Spiegelfacetten am Außenumfang, woher auch die Bezeichnung Polygonscanner abgeleitet ist. Die Erfindung geht nun von dem Grundgedanken aus, Spiegelfacetten mit untereinander unterschiedlichem Reflexionsgrad zu verwenden. Das bedeutet, dass zumindest einige Spiegelfacetten sich im Reflexionsgrad unterscheiden, minimal also eine Spiegelfacette einen anderen Reflexionsgrad aufweist als die übrigen. Damit sind nicht lediglich unvermeidliche Toleranzen gemeint, sondern die gezielte Verwendung von Spiegelfacetten mit unterschiedlichem Reflexionsverhalten. Da in einem Polygonscanner ein Winkelausschnitt oder Segment des Überwachungsbereichs je Umdrehung der Spiegeleinheit mehrfach abgetastet wird, ergibt sich mit den unterschiedlichen Reflexionsgraden eine Mehrfachabtastung bei unterschiedlichem Empfangspegel.

Die Erfindung hat den Vorteil, dass bereits im optischen Pfad des Messsystems unterschiedlich starke Empfangssignale auf ein ähnliches energetisches Niveau gebracht werden können. Dadurch wird die Auswertung im weiteren Empfangspfad erheblich vereinfacht und eine verbesserte Genauigkeit ermöglicht. Die Vereinfachungen in Elektronik und Auswertung sparen Herstellkosten und Bauraum.

Der Reflexionsgrad variiert vorzugsweise zwischen den Spiegelfacetten um mindestens eine Größenordnung. Dementsprechend kann der effektiv erfassbare Dynamikbereich ebenfalls um mindestens eine Größenordnung, also einen Faktor zehn, erweitert werden. Die Größenordnung kann die Skala der gesamten Variation betreffen, also den Unterschied zwischen der am stärksten und am schwächsten reflektierenden Spiegelfacette, aber auch den Unterschied zwischen jeweils zwei Spiegelfacetten. Beispielsweise schwankt bei Spiegelfacetten mit Reflexionsgraden 10%, 20%, 40%, 60%, 80%, und 100% der Reflexionsgrad insgesamt um eine Größenordnung, bei Reflexionsgraden von 0,1%, 1%, 10% und 100% sogar von Spiegelfacette zu Spiegelfacette. Dies sind nur zwei Beispiele, die verdeutlichen sollen, was erfindungsgemäß unter einem unterschiedlichen Reflexionsgrad verstanden werden kann.

Zumindest einige der Spiegelfacetten weisen bevorzugt einen Sendebereich und einen Empfangsbereich mit untereinander unterschiedlichem Reflexionsgrad auf. Somit wird der Lichtstrahl beim Austreten aus dem Polygonscanner in einem anderen Bereich der Spiegelfacette abgelenkt als beim Eintreten. Dies kann genutzt werden, um den Reflexionsgrad weiter zu variieren. Erneut sind nicht lediglich Toleranzabweichungen, sondern gezielte Abweichungen von zumindest einigen Prozent oder sogar von mindestens einer Größenordnung gemeint. Das Empfangssignal ist proportional zum Produkt aus den beiden Reflexionsgraden in Sendebereich und Empfangsbereich, so dass durch Kombinatorik leicht eine große Varianz des effektiven Reflexionsgrads des Messsystems geschaffen werden kann. Es ist dabei durchaus möglich, dass bei mindestens einer Spiegelfacette der Sendebereich und der Empfangsbereich den gleichen Reflexionsgrad aufweisen.

Die Sendebereiche zumindest einiger Spiegelfacetten weisen bevorzugt einen untereinander unterschiedlichen Reflexionsgrad auf. Ebenso weisen die Empfangsbereiche zumindest einiger Spiegelfacetten bevorzugt einen untereinander unterschiedlichen Reflexionsgrad auf. Die größte Varianz im Empfangspegel wird dadurch erreicht, dass alle Reflexionsgrade unterschiedlich gewählt sind. Wegen der kombinierten Wirkung von Sende- und Empfangsbereichen kann aber auch mit physisch gleichen Reflexionsgraden zumindest einiger Sende- beziehungsweise Empfangsbereiche auf unterschiedlichen Spiegelfacetten ein unterschiedlicher effektiver Reflexionsgrad erreicht werden. Außerdem kann in einigen Systemen eine redundante Messung mit gleichem effektivem Reflexionsgrad durchaus erwünscht sein. Ein Beispiel ist, zwei Hälften oder andere Bruchteile der Spiegeleinheit gleichartig auszugestalten, um die effektive Scanfrequenz zu erhöhen. Ein anderes Beispiel ist eine redundante Messung oder eine mehrfache Messung, bei der ein anderer Faktor variiert wird als der Reflexionsgrad, etwa die Sendeleistung.

Die Auswertungseinheit ist bevorzugt dafür ausgebildet, aus dem Empfangssignal mit einem Lichtlaufzeitverfahren eine Entfernung eines angetasteten Objekts zu bestimmen. Der Polygonscanner wird so zu einem entfernungsmessenden Scanner. Als Lichtlaufzeitverfahren kommt jedes bekannte Verfahren in Betracht, von denen einleitend einige skizziert wurden.

Die Auswertungseinheit ist bevorzugt dafür ausgebildet, die Empfangssignale von unterschiedlichen Spiegelfacetten miteinander zu vergleichen und das Empfangssignal mit der besten Aussteuerung auszuwerten. Das ist insbesondere dasjenige Empfangssignal, das den digitalen Wertebereich eines A/D-Wandlers im Empfangspfad am besten ausnutzt. Die Auswahl kann auch dadurch stattfinden, dass zunächst alle Empfangssignale unabhängig von der Aussteuerung in Echtzeit ausgewertet werden und anschließend unter Berücksichtigung des Signalpegels ein gewichtetes Mittel über die erfassten Objektinformationen gebildet wird, beispielsweise den Objektabstand, bei dem übersteuerte oder zu schwache Empfangssignale kaum gewichtet oder ganz verworfen werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Blockdarstellung eines Polygonscanners;
- Fig. 2: eine Seitenansicht eines Polygonspiegelrads mit Sende- und Empfangsbereichen und unterschiedlichen Reflexionsgraden;
- Fig. 3a: eine Draufsicht auf ein Polygonspiegelrad zur beispielhaften Kennzeichnung der Spiegelfacetten; und
- Fig. 3b: eine Tabelle mit einem Zahlenbeispiel für unterschiedliche Reflexionsgrade der Spiegelfacetten gemäß Figur 3a.

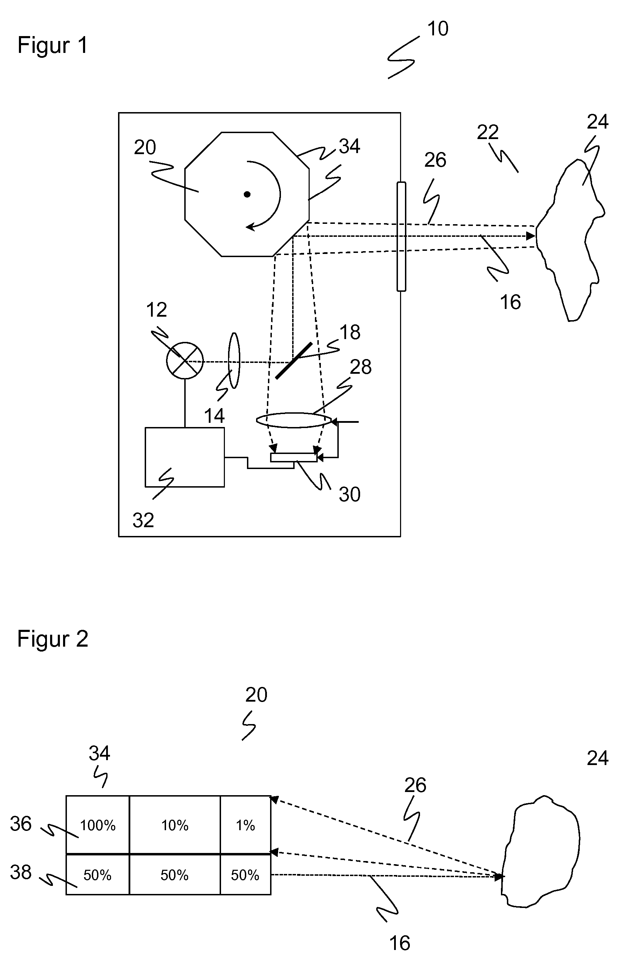

Figur 1 zeigt eine Blockdarstellung eines Polygonscanners 10. Ein Lichtsender 12, beispielsweise eine Laserdiode oder eine LED, erzeugt mit Hilfe einer Sendeoptik 14 einen Lichtstrahl 16, der ein erstes Mal über ein fixes Ablenkelement 18 und ein zweites Mal über ein rotierendes Polygonspiegelrad 20 umgelenkt und dann in einen Überwachungsbereich 22 ausgesandt wird.

Trifft der Lichtstrahl 16 in dem Überwachungsbereich 22 auf ein Objekt 24, so kehrt ein reflektierter Lichtstrahl 26 zu dem Polygonscanner 10 zurück, wird erneut an dem Polygonspiegelrad 20 umgelenkt und trifft dann über eine Empfangsoptik 28 auf einen Lichtempfänger 30. Dabei wird hier sprachlich nicht zwischen Reflexion und der wesentlich häufiger auftretenden diffusen Remission an dem Objekt 24 unterschieden. Das fixe Ablenkelement 18 ist entweder als Strahlteiler ausgebildet oder so klein, dass nur ein vernachlässigbarer Teil der Empfangsoptik 28 abgeschattet wird, so dass der reflektierte Lichtstrahl 26 das fixe Ablenkelement 18 passieren kann. Möglich wäre auch ein Strahlteiler oder eine biaxiale Ausführung. Ausgesandter Lichtstrahl 16 und reflektierter Lichtstrahl 26 sind dann im Wesentlichen parallel zueinander mit einem geringen Abstand in Richtung der Drehachse des Polygonspiegelrades 20. Der Grundaufbau des Polygonscanners 10 gemäß Figur 1 ist also nur beispielhaft zu verstehen. So können etwa Sende- und Empfangspfad auch anders getrennt werden als durch die dargestellte gekreuzte Anordnung mit fixer Ablenkeinheit 18, oder das Polygonspiegelrad 20 kann gegenüber Sende- und Empfangspfad anders angeordnet und orientiert werden.

Ein von dem Lichtempfänger 30 erzeugtes Empfangssignal wird an eine Auswertungseinheit 32 übergeben. Dort wird beispielsweise erkannt, ob überhaupt ein Objekt 24 angetastet wurde, oder vorzugsweise mit einem Lichtlaufzeitverfahren dessen Abstand ermittelt.

Das Polygonspiegelrad 20 ist ein Beispiel für eine drehbare Spiegeleinheit mit mehreren Spiegelfacetten 34 an ihrem Außenumfang. Die Anzahl der Spiegelfacetten 34 korrespondiert mit dem erfassten Winkelbereich oder abgetasteten Segment des Überwachungsbereichs 22, der umso größer ist, je weniger Spiegelfacetten 34 vorgesehen sind. Demnach ist die gezeigte Anzahl von acht Spiegelfacetten 34 rein beispielhaft, und es können ebenso mehr oder weniger Spiegelfacetten 34 vorgesehen sein. Die Grundfläche muss auch kein regelmäßiges Vieleck sein, sondern es ist prinzipiell auch möglich, Spiegelfacetten 34 unterschiedlicher Länge vorzusehen.

Die Auswertungseinheit 32 kennt die jeweilige Drehstellung des Polygonspiegelrads 20 beispielsweise über einen Encoder, der in Figur 1 ebenso wie der Antrieb für die Rotation nicht gezeigt und an sich bekannt ist. Zusammen mit einem über ein Lichtlaufzeitverfahren gemessenen Abstand werden deshalb vorzugsweise Objektpositionen oder Objektkonturen in Polarkoordinaten erfassbar. Eine mögliche Anwendung ist die Vermessung von Objekten, insbesondere Paketen auf Förderbändern. In einer anderen denkbaren Anwendung wird kein Objektabstand bestimmt oder nur als Hilfsgröße für die Fokussierung verwendet. Das kann beispielsweise das Lesen von Barcodes sein.

Figur 2 zeigt eine Seitenansicht des Polygonspiegelrads 20. Die Spiegelfacetten 34 sind jeweils in einen Sendebereich 38 und einen Empfangsbereich 36 unterteilt. Der austretende Lichtstrahl 16 wird jeweils von einem Sendebereich 38, der reflektierte Lichtstrahl 26 von einem Empfangsbereich 36 abgelenkt. Die Spiegelfacetten 34 und deren Sendebereiche 38 beziehungsweise Empfangsbereiche 36 sind durch Verwendung unterschiedlicher Beschichtungen, Materialien, Oberflächenbehandlung oder dergleichen so ausgestaltet, dass sie unterschiedliche Reflexionsgrade aufweisen, wie dies durch rein beispielhafte Prozentzahlen dargestellt ist. Dabei bedeutet ein unterschiedlicher Reflexionsgrad nicht zwingend, dass keine zwei Spiegelfacetten 34 oder Sendebereiche 38 beziehungsweise Empfangsbereiche 36 den gleichen Reflexionsgrad aufweisen dürfen, wie dies in Figur 2 durch mehrere Sendebereiche mit Reflexionsgrad 50% auch dargestellt ist.

Während des Betriebs des Polygonscanners 10 wird durch die Drehung des Polygonspiegelrads 20 der Überwachungsbereich 22 mehrfach abgetastet, nämlich während einer vollen Umdrehung je einmal mit jeder Spiegelfacette 34. Dies bedeutet eine Mehrfachmessung derselben Szenerie, sofern sie innerhalb der kurzen Umdrehungsperiode als quasistationär angesehen werden kann. Aufgrund der unterschiedlichen Reflexionsgrade der Spiegelfacetten 34 sind das allerdings keine reinen Messwiederholungen, sondern das Objekt 24 erzeugt trotz gleichbleibender Helligkeit und Entfernung unterschiedlich starke Empfangssignale. Die Auswertungseinheit 32 erhält also mehrere Empfangssignale mit an sich gleicher Messinformation, jedoch unterschiedlichem Empfangspegel und damit unterschiedlicher Aussteuerung. Dadurch wird eine verbesserte Auswertung mit geringerem Störeinfluss der Signaldynamik möglich, indem die Auswertungseinheit 32 beispielsweise ein Empfangssignal mit guter oder bester Aussteuerung auswählt, mehrere Empfangssignale miteinander vergleicht oder verrechnet oder zu schwache beziehungsweise übersteuerte Empfangssignale verwirft. Die Dynamik für die Empfangselektronik kann so bereits auf dem optischen Pfad reduziert werden.

Es ist zusätzlich möglich, die Empfangssignale einer aufwändigeren Signalverarbeitung sowohl im elektronischen Teil des Empfangspfades, also etwa einer Verstärkung, Filterung und/oder Digitalisierung, als auch in der anschließenden Auswertung zu unterziehen. Dadurch werden die einzelnen Empfangssignale von den jeweiligen Spiegelfacetten 34 besser genutzt. So können weniger Abstufungen der Reflexionsgrade der Spiegelfacetten ausreichen, um das Dynamikproblem zu lösen. Außerdem wird leichter erreicht, dass zumindest zwei unterschiedliche Reflexionsgrade immer noch ein auswertbares Empfangssignal erzeugen. Beides führt dazu, dass je Umdrehung mehrere Messungen möglich sind, so dass sich die effektive Scanfrequenz bei ansonsten gleichen Parametern erhöht.

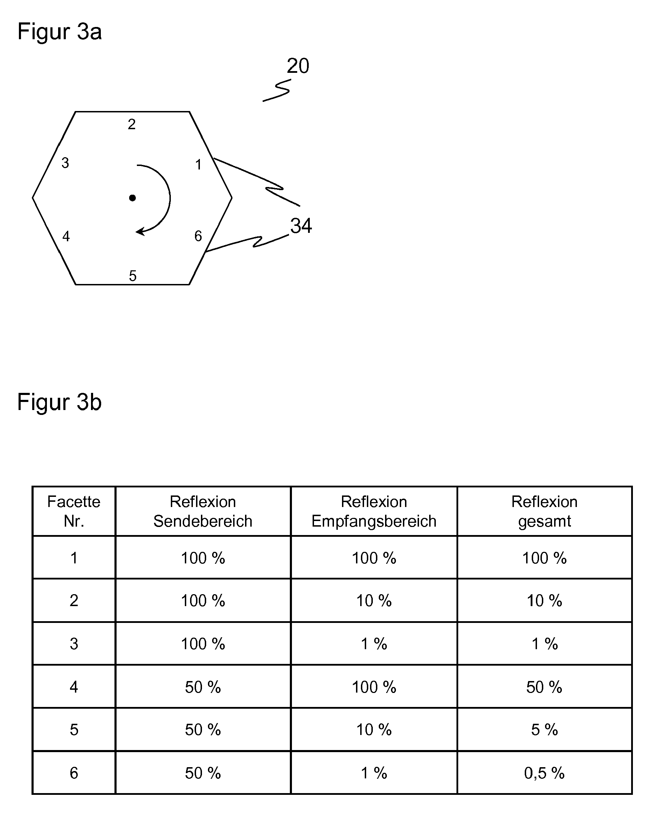

Figur 3a zeigt noch einmal eine Draufsicht auf ein Polygonspiegelrad 20 hier nun mit beispielhaft sechs Spiegelfacetten 34. Die Spiegelfacetten 34 sind nummeriert, und diese Facettennummern dienen in einer Tabelle gemäß Figur 3b dazu, ein Zahlenbeispiel für unterschiedliche Reflexionsgrade in den Sendebereichen 38 und den Empfangsbereichen 36 sowie den sich daraus ergebenden effektiven Gesamtreflexionsgrad anzugeben. Dabei haben jeweils drei aufeinanderfolgende Sendebereiche 38 den gleichen Reflexionsgrad von 100% beziehungsweise 50%. Die zugehörigen Empfangsbereiche 36 variieren jeweils von einem Reflexionsgrad 100% über 10% zu 1%. Während einer Umdrehung des Polygonspiegelrads 20 wird das Objekt so insgesamt sechs Mal erfasst, nämlich mit einem effektiven Gesamtreflexionsgrad von 100%, 10%, 1%, 50%, 5% und 0,5%. Wie aus diesem Zahlenbeispiel ersichtlich, genügen bereits wenige unterschiedliche Reflexionsgrade, um durch Kombinationen einen großen Bereich an möglichen Empfangspegeln abzudecken.

## Patentansprüche

1. Polygonscanner (10) zum Erfassen von Objekten (24) in einem Überwachungsbereich (22) mit einem Lichtsender (12) zum Aussenden eines Lichtstrahls (16) in den Überwachungsbereich (22), mit einem Lichtempfänger (30) zum Empfangen des von Objekten (24) in dem Überwachungsbereich (22) reflektierten Lichtstrahls (26), mit einer Auswertungseinheit (32) zum Auswerten eines Empfangssignals des Lichtempfängers (30) und mit einer drehbaren Spiegeleinheit (20) zur periodischen Ablenkung des Lichtstrahls (16, 26), die mehrere Spiegelfacetten (34) aufweist, um so als Überwachungsbereich (22) einen Winkelausschnitt mehrfach je Umdrehung der Spiegeleinheit (20) mit einer jeweiligen Spiegelfacette (34) abzutasten,
**dadurch gekennzeichnet,**
**dass** die Spiegelfacetten (34) untereinander unterschiedliche Reflexionsgrade aufweisen.

2. Polygonscanner (10) nach Anspruch 1,
wobei der Reflexionsgrad zwischen den Spiegelfacetten (34) um mindestens eine Größenordnung variiert.

3. Polygonscanner (10) nach Anspruch 1 oder 2,
wobei zumindest einige der Spiegelfacetten (34) einen Sendebereich (38) und einen Empfangsbereich (36) mit untereinander unterschiedlichem Reflexionsgrad aufweisen.

4. Polygonscanner (10) nach Anspruch 3,
wobei die Sendebereiche (38) zumindest einiger Spiegelfacetten (34) einen untereinander unterschiedlichen Reflexionsgrad aufweisen.

5. Polygonscanner (10) nach Anspruch 3 oder 4,
wobei die Empfangsbereiche (36) zumindest einiger Spiegelfacetten (34) einen untereinander unterschiedlichen Reflexionsgrad aufweisen.

6. Polygonscanner (10) nach einem der vorhergehenden Ansprüche,
wobei die Auswertungseinheit (32) dafür ausgebildet ist, aus dem Empfangssignal mit einem Lichtlaufzeitverfahren eine Entfernung eines angetasteten Objekts (24) zu bestimmen.

7. Polygonscanner (10) nach einem der vorhergehenden Ansprüche,
wobei die Auswertungseinheit (32) dafür ausgebildet ist, die Empfangssignale von unterschiedlichen Spiegelfacetten (34) miteinander zu vergleichen und das Empfangssignal mit der besten Aussteuerung auszuwerten.

8. Verfahren zum Erfassen von Objekten (24) in einem Überwachungsbereich (22), bei dem ein Lichtstrahl (16) ausgesandt und nach Reflexion an einem Objekt (24) in dem Überwachungsbereich (22) wieder empfangen und ausgewertet wird, wobei ein Winkelbereich des Überwachungsbereiches (22) periodisch abgetastet wird, indem der Lichtstrahl (16, 26) an Spiegelfacetten (34) einer drehbaren Spiegeleinheit (20) mit mehreren Spiegelfacetten (34) abgelenkt wird,
**dadurch gekennzeichnet,**
**dass** der Lichtstrahl (16, 26) in verschiedenen Perioden der Abtastung durch unterschiedliche Reflexionsgrade der Spiegelfacetten (34) unterschiedlich stark gedämpft wird.
